# EUROPEAN PATENT APPLICATION

(11) **EP 4 456 610 A1**
(43) Date of publication of application: **30.10.2024**
(21) Application number: 24167114.8
(22) Date of filing: 28.03.2024
(51) Int. Cl.: H04W 52/02

(54) **CO-ORDINATION OF SPATIAL DOMAIN INFORMATION, POWER DOMAIN INFORMATION AND CELL DISCONTINUOUS TRANSMISSION AND/OR DISCONTINUOUS RECEPTION**

(30) Priority: 06.04.2023 IN 202311025959
(71) Applicant: Nokia Technologies Oy, 02610 Espoo (FI)
(72) Inventor: BALASUBRAMANIAM, Sankaran, Bangalore (IN); LASELVA, Daniela, Klarup (DK); PANTELIDOU, Anna, Antony (FR); HELMERS, Hakon, Sceaux (FR); KHLASS, Ahlem, Massy (FR); HMEDOUSH, Iman, Massy (FR)
(74) Representative: Nokia EPO representatives

(57) **Abstract**

An apparatus comprising: means for obtaining an information element for a first cell, the information element related to i) information describing at least one spatial adaptation configuration and power adaptation configuration and ii) information describing at least one of a discontinuous transmission pattern and a discontinuous reception pattern; means for sending, to a network entity, the information element for the first cell.

## Description

### FIELD

The present application relates to a method, apparatus, system and computer program.

### BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite-based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect, there is an apparatus comprising: means for obtaining an information element for a first cell, the information element comprising i) information related to at least one of spatial adaptation configuration and power adaptation configuration and ii) information describing at least one of a discontinuous transmission pattern and a discontinuous reception pattern; means for sending, to a network entity, the information element for the first cell.

According to some examples, the apparatus comprises means for receiving, from the network entity, a response indicating that a configuration for a second cell has been updated or not based on the information element for the first cell.

According to some examples, the apparatus comprises a distributed unit of the first cell in a first radio access network node and the network entity comprises a centralized unit in the first radio access network node.

According to some examples, the apparatus comprises a centralized unit for a distributed unit of the first cell in a first radio access network node, and wherein the network entity comprises a centralized unit for a distributed unit of the second cell in a second radio access network node.

According to some examples, the apparatus comprises a distributed unit of the first cell in a first radio access network node and the network entity comprises a centralized unit in the first radio access network node, wherein the centralized unit is configured to forward the information element to a distributed unit of the second cell in the first radio access network node.

According to some examples, the information describing the at least one of the discontinuous transmission pattern and the discontinuous reception pattern comprises at least one of: an identifier of a discontinuous transmission pattern; an identifier of a discontinuous reception pattern; a discontinuous transmission cycle periodicity; a discontinuous reception cycle periodicity; a discontinuous transmission on-duration time period; a discontinuous reception on-duration time period; a time offset for the discontinuous transmission pattern; a time offset for the discontinuous reception pattern.

According to some examples, the information element comprises information related to the spatial adaptation configuration, the information related to the spatial adaptation configuration comprising an indication indicating whether a spatial adaptation pattern is used for the at least one of the discontinuous transmission pattern and the discontinuous reception pattern.

According to some examples, the information element comprises information related to the spatial adaptation configuration, the information related to the spatial adaptation configuration indicating the number of transceivers and/or antenna elements associated with the at least one of the discontinuous transmission pattern and the discontinuous reception pattern.

According to some examples, the information element comprises information related to the spatial adaptation configuration, the information related to the spatial adaptation configuration comprising a range of at least one transceiver and/or at least one antenna element associated with the at least one of the discontinuous transmission pattern and the discontinuous reception pattern.

According to some examples, the information element comprises information related to the power adaptation configuration, the information related to the power adaptation configuration comprising an indication of whether Physical Downlink Shared Channel power reduction can be used for the discontinuous transmission pattern.

According to some examples, the information element comprises information related to the power adaptation configuration, the information related to the power adaptation configuration indicating the power level of Physical Downlink Shared Channel transmission that can be used for the discontinuous transmission pattern in the first cell.

According to some examples, the information element comprises information related to the power adaptation configuration, the information related to the power adaptation configuration comprising an indication of whether a power reduction can be used for the at least one of the discontinuous transmission pattern and the discontinuous reception pattern.

According to some examples, the information element comprises information related to the power adaptation configuration, the information related to the power adaptation configuration comprising an indication of the Physical Downlink Shared Channel power reduction range that can be used for the discontinuous transmission pattern.

According to some examples, the information element is for active periods of the at least one of the discontinuous transmission pattern and the discontinuous reception pattern, wherein the apparatus comprises: means for obtaining a second information element for inactive periods of the first cell, the second information element comprising spatial adaptation information, power adaptation information and information describing at least one of a discontinuous transmission pattern and a discontinuous reception pattern; means for sending, to the network entity, the second information element for the first cell.

According to some examples, the information element comprising information related to the spatial adaptation configuration and information related to the power adaptation configuration.

According to a second aspect, there is provided a method comprising: obtaining an information element for a first cell, the information element comprising i) information related to at least one of spatial adaptation configuration and power adaptation configuration and ii) information describing at least one of a discontinuous transmission pattern and a discontinuous reception pattern; sending, to a network entity, the information element for the first cell.

According to some examples, the method comprises receiving, from the network entity, a response indicating that a configuration for a second cell has been updated or not based on the information element for the first cell.

According to some examples, the method is performed by a distributed unit of the first cell in a first radio access network node and the network entity comprises a centralized unit in the first radio access network node.

According to some examples, the method is performed by a centralized unit for a distributed unit of the first cell in a first radio access network node, and the network entity comprises a centralized unit for a distributed unit of the second cell in a second radio access network node.

According to some examples, the method is performed by a distributed unit of the first cell in a first radio access network node and the network entity comprises a centralized unit in the first radio access network node, wherein the centralized unit is configured to forward the information element to a distributed unit of the second cell in the first radio access network node.

According to some examples, the information describing the at least one of the discontinuous transmission pattern and the discontinuous reception pattern comprises at least one of: an identifier of a discontinuous transmission pattern; an identifier of a discontinuous reception pattern; a discontinuous transmission cycle periodicity; a discontinuous reception cycle periodicity; a discontinuous transmission on-duration time period; a discontinuous reception on-duration time period; a time offset for the discontinuous transmission pattern; a time offset for the discontinuous reception pattern.

According to some examples, the information element comprises information related to the spatial adaptation configuration, the information related to the spatial adaptation configuration comprising an indication indicating whether a spatial adaptation pattern is used for the at least one of the discontinuous transmission pattern and the discontinuous reception pattern.

According to some examples, the information element comprises information related to the spatial adaptation configuration, the information related to the spatial adaptation configuration indicating the number of transceivers and/or antenna elements associated with the at least one of the discontinuous transmission pattern and the discontinuous reception pattern.

According to some examples, the information element comprises information related to the spatial adaptation configuration, the information related to the spatial adaptation configuration comprising a range of at least one transceiver and/or at least one antenna element associated with the at least one of the discontinuous transmission pattern and the discontinuous reception pattern.

According to some examples, the information element comprises information related to the power adaptation configuration, the information related to the power adaptation configuration comprising an indication of whether Physical Downlink Shared Channel power reduction can be used for the discontinuous transmission pattern.

According to some examples, the information element comprises information related to the power adaptation configuration, the information related to the power adaptation configuration indicating the power level of Physical Downlink Shared Channel transmission that can be used in the discontinuous transmission pattern in the first cell.

According to some examples, the information element comprises information related to the power adaptation configuration, the information related to the power adaptation configuration comprising an indication of whether a power reduction can be used for the at least one of the discontinuous transmission pattern and the discontinuous reception pattern.

According to some examples, the information element comprises information related to the power adaptation configuration, the information related to the power adaptation configuration comprising an indication of the Physical Downlink Shared Channel power reduction range that can be used for the discontinuous transmission pattern.

According to some examples, the information element is for active periods of the at least one of the discontinuous transmission pattern and the discontinuous reception pattern, and the method comprises: obtaining a second information element for inactive periods of the first cell, the second information element comprising spatial adaptation information, power adaptation information and information describing at least one of a discontinuous transmission pattern and a discontinuous reception pattern; sending, to the network entity, the second information element for the first cell.

According to some examples, the information element comprising information related to the spatial adaptation configuration and information related to the power adaptation configuration.

According to a third aspect, there is provided an apparatus comprising at least one processor and at least one memory storing instructions that, when executed by the at least one processor, cause the apparatus at least to: obtaining an information element for a first cell, the information element comprising i) information related to at least one of spatial adaptation configuration and power adaptation configuration and ii) information describing at least one of a discontinuous transmission pattern and a discontinuous reception pattern; sending, to a network entity, the information element for the first cell.

According to some examples, the at least one memory and the computer program code are configured to, with the at least one processor, cause the apparatus at least to perform: receiving, from the network entity, a response indicating that a configuration for a second cell has been updated or not based on the information element for the first cell.

According to some examples, the apparatus comprises a distributed unit of the first cell in a first radio access network node and the network entity comprises a centralized unit in the first radio access network node.

According to some examples, the apparatus comprises a centralized unit for a distributed unit of the first cell in a first radio access network node, and the network entity comprises a centralized unit for a distributed unit of the second cell in a second radio access network node.

According to some examples, the apparatus comprises a distributed unit of the first cell in a first radio access network node and the network entity comprises a centralized unit in the first radio access network node, wherein the centralized unit is configured to forward the information element to a distributed unit of the second cell in the first radio access network node.

According to some examples, the information describing the at least one of the discontinuous transmission pattern and the discontinuous reception pattern comprises at least one of: an identifier of a discontinuous transmission pattern; an identifier of a discontinuous reception pattern; a discontinuous transmission cycle periodicity; a discontinuous reception cycle periodicity; a discontinuous transmission on-duration time period; a discontinuous reception on-duration time period; a time offset for the discontinuous transmission pattern; a time offset for the discontinuous reception pattern.

According to some examples, the information element comprises information related to the spatial adaptation configuration, the information related to the spatial adaptation configuration comprising an indication indicating whether a spatial adaptation pattern is used for the at least one of the discontinuous transmission pattern and the discontinuous reception pattern.

According to some examples, the information element comprises information related to the spatial adaptation configuration, the information related to the spatial adaptation configuration indicating the number of transceivers and/or antenna elements associated with the at least one of the discontinuous transmission pattern and the discontinuous reception pattern.

According to some examples, the information element comprises information related to the spatial adaptation configuration, the information related to the spatial adaptation configuration comprising a range of at least one transceiver and/or at least one antenna element associated with the at least one of the discontinuous transmission pattern and the discontinuous reception pattern.

According to some examples, the information element comprises information related to the power adaptation configuration, the information related to the power adaptation configuration comprising an indication of whether Physical Downlink Shared Channel power reduction can be used for the discontinuous transmission pattern.

According to some examples, the information element comprises information related to the power adaptation configuration, the information related to the power adaptation configuration indicating the power level of Physical Downlink Shared Channel transmission that can be used for the discontinuous transmission pattern in the first cell.

According to some examples, the information element comprises information related to the power adaptation configuration, the information related to the power adaptation configuration comprising an indication of whether a power reduction can be used for the at least one of the discontinuous transmission pattern and the discontinuous reception pattern.

According to some examples, the information element comprises information related to the power adaptation configuration, the information related to the power adaptation configuration comprising an indication of the Physical Downlink Shared Channel power reduction range that can be used for the discontinuous transmission pattern.

According to some examples, the information element is for active periods of the at least one of the discontinuous transmission pattern and the discontinuous reception pattern, and the at least one memory and the computer program code are configured to, with the at least one processor, cause the apparatus at least to perform: obtaining a second information element for inactive periods of the first cell, the second information element comprising spatial adaptation information, power adaptation information and information describing at least one of a discontinuous transmission pattern and a discontinuous reception pattern; sending, to the network entity, the second information element for the first cell.

According to some examples, the information element comprising information related to the spatial adaptation configuration and information related to the power adaptation configuration.

According to a fourth aspect there is provided an apparatus comprising: circuitry for: obtaining an information element for a first cell, the information element comprising i) information related to at least one of spatial adaptation configuration and power adaptation configuration and ii) information describing at least one of a discontinuous transmission pattern and a discontinuous reception pattern; sending, to a network entity, the information element for the first cell.

According to a fifth aspect there is provided a computer program comprising instructions for causing an apparatus to perform at least the following: obtaining an information element for a first cell, the information element comprising i) information related to at least one of spatial adaptation configuration and power adaptation configuration and ii) information describing at least one of a discontinuous transmission pattern and a discontinuous reception pattern; sending, to a network entity, the information element for the first cell.

According to a sixth aspect there is provided a computer program comprising instructions stored thereon for performing at least the following: obtaining an information element for a first cell, the information element comprising i) information related to at least one of spatial adaptation configuration and power adaptation configuration and ii) information describing at least one of a discontinuous transmission pattern and a discontinuous reception pattern; sending, to a network entity, the information element for the first cell.

According to a seventh aspect there is provided a non-transitory computer readable medium comprising program instructions for causing an apparatus to perform at least the following obtaining an information element for a first cell, the information element comprising i) information related to at least one of spatial adaptation configuration and power adaptation configuration and ii) information describing at least one of a discontinuous transmission pattern and a discontinuous reception pattern; sending, to a network entity, the information element for the first cell.

According to an eighth aspect there is provided a non-transitory computer readable medium comprising program instructions stored thereon for performing at least the following: obtaining an information element for a first cell, the information element comprising i) information related to at least one of spatial adaptation configuration and power adaptation configuration and ii) information describing at least one of a discontinuous transmission pattern and a discontinuous reception pattern; sending, to a network entity, the information element for the first cell.

According to a ninth aspect there is provided an apparatus comprising: means for receiving, from a network entity, an information element for a first cell, the information element comprising i) information related to least one of spatial adaptation configuration and power adaptation configuration and ii) information describing at least one of a discontinuous transmission pattern and a discontinuous reception pattern; means for determining whether to update a configuration for a second cell based on the information element for the first cell.

According to some examples, the apparatus comprises: means for sending, to the network entity, a response indicating that a configuration for the second cell has been updated or not based on the information element for the first cell.

According to some examples, the network entity comprises a distributed unit of the first cell in a first radio access network node and the apparatus comprises a centralized unit in the first radio access network node.

According to some examples, the network entity comprises a centralized unit for a distributed unit of the first cell in a first radio access network node, and wherein the apparatus comprises a centralized unit for a distributed unit of the second cell in a second radio access network node.

According to some examples, the network entity comprises a distributed unit of the first cell in a first radio access network node and apparatus comprises a centralized unit in the first radio access network node, wherein the centralized unit is configured to forward the information element to a distributed unit of the second cell in the first radio access network node.

According to some examples, the information describing the at least one of the discontinuous transmission pattern and the discontinuous reception pattern comprises at least one of: an identifier of a discontinuous transmission pattern; an identifier of a discontinuous reception pattern; a discontinuous transmission cycle periodicity; a discontinuous reception cycle periodicity; a discontinuous transmission on-duration time period; a discontinuous reception on-duration time period; a time offset for the discontinuous transmission pattern; a time offset for the discontinuous reception pattern.

According to some examples, updating the configuration for the second cell comprises at least one of: changing a discontinuous transmission pattern of the second cell to minimize interference with the at least one of the discontinuous transmission pattern and the discontinuous reception pattern of the first cell by selecting the discontinuous transmission pattern of the second cell to have active transmission periods when the first cell has inactive periods and/or is using a lower power level; changing a discontinuous reception pattern of the second cell to minimize interference with the at least one of the discontinuous transmission pattern and the discontinuous reception pattern of the first cell by selecting the discontinuous reception pattern of the second cell to have active reception periods when the first cell has inactive periods and/or is using a lower power level.

According to some examples, the information element comprises information related to the spatial adaptation configuration, the information related to the spatial adaptation configuration comprising an indication indicating whether a spatial adaptation pattern is used for the at least one of the discontinuous transmission pattern and the discontinuous reception pattern.

According to some examples, the information element comprises information related to the spatial adaptation configuration, the information related to the spatial adaptation configuration indicating the number of transceivers and/or antenna elements associated with the at least one of the discontinuous transmission pattern and the discontinuous reception pattern.

According to some examples, the information element comprises information related to the spatial adaptation configuration, the information related to the spatial adaptation configuration comprising a range of at least one transceiver and/or at least one antenna element associated with the at least one of the discontinuous transmission pattern and the discontinuous reception pattern.

According to some examples, the information element comprises information related to the power adaptation configuration, the information related to the power adaptation configuration comprising an indication of whether Physical Downlink Shared Channel power reduction can be used for the discontinuous transmission pattern.

According to some examples, the information element comprises information related to the power adaptation configuration, the information related to the power adaptation configuration indicating the power level of Physical Downlink Shared Channel transmission that can be used for the discontinuous transmission pattern in the first cell.

According to some examples, the information element comprises information related to the power adaptation configuration, the information related to the power adaptation configuration comprising an indication of whether a power reduction can be used for the at least one of the discontinuous transmission pattern and the discontinuous reception pattern.

According to some examples, the information element comprises information related to the power adaptation configuration, the information related to the power adaptation configuration comprising an indication of the Physical Downlink Shared Channel power reduction range that can be used for the discontinuous transmission pattern.

According to some examples, the information element is for active periods of the at least one of the discontinuous transmission pattern and the discontinuous reception pattern, wherein the apparatus comprises: means for receiving, from the network entity, a second information element for inactive periods of the first cell, the second information element comprising spatial adaptation information, power adaptation information and information describing at least one of a discontinuous transmission pattern and a discontinuous reception pattern; means for sending, to the network entity, a response indicating that the configuration for the second cell has been updated or not based on the second information element for the first cell.

According to some examples, the information element comprising information related to the spatial adaptation configuration and information related to the power adaptation configuration.

According to a tenth aspect there is provided a method comprising: receiving, from a network entity, an information element for a first cell, the information element comprising i) information related to least one of spatial adaptation configuration and power adaptation configuration and ii) information describing at least one of a discontinuous transmission pattern and a discontinuous reception pattern; determining whether to update a configuration for a second cell based on the information element for the first cell.

According to some examples, the method comprises sending, to the network entity, a response indicating that a configuration for the second cell has been updated or not based on the information element for the first cell.

According to some examples, the network entity comprises a distributed unit of the first cell in a first radio access network node and the method is performed by a centralized unit in the first radio access network node.

According to some examples, the network entity comprises a centralized unit for a distributed unit of the first cell in a first radio access network node, and the method is performed by a centralized unit for a distributed unit of the second cell in a second radio access network node.

According to some examples, the network entity comprises a distributed unit of the first cell in a first radio access network node and method is performed by a centralized unit in the first radio access network node, wherein the centralized unit is configured to forward the information element to a distributed unit of the second cell in the first radio access network node.

According to some examples, the information describing the at least one of the discontinuous transmission pattern and the discontinuous reception pattern comprises at least one of: an identifier of a discontinuous transmission pattern; an identifier of a discontinuous reception pattern; a discontinuous transmission cycle periodicity; a discontinuous reception cycle periodicity; a discontinuous transmission on-duration time period; a discontinuous reception on-duration time period; a time offset for the discontinuous transmission pattern; a time offset for the discontinuous reception pattern.

According to some examples, updating the configuration for the second cell comprises at least one of: changing a discontinuous transmission pattern of the second cell to minimize interference with the at least one of the discontinuous transmission pattern and the discontinuous reception pattern of the first cell by selecting the discontinuous transmission pattern of the second cell to have active transmission periods when the first cell has inactive periods and/or is using a lower power level; changing a discontinuous reception pattern of the second cell to minimize interference with the at least one of the discontinuous transmission pattern and the discontinuous reception pattern of the first cell by selecting the discontinuous reception pattern of the second cell to have active reception periods when the first cell has inactive periods and/or is using a lower power level.

According to some examples, the information element comprises information related to the spatial adaptation configuration, the information related to the spatial adaptation configuration comprising an indication indicating whether a spatial adaptation pattern is used for the at least one of the discontinuous transmission pattern and the discontinuous reception pattern.

According to some examples, the information element comprises information related to the spatial adaptation configuration, the information related to the spatial adaptation configuration indicating the number of transceivers and/or antenna elements associated with the at least one of the discontinuous transmission pattern and the discontinuous reception pattern.

According to some examples, the information element comprises information related to the spatial adaptation configuration, the information related to the spatial adaptation configuration comprising a range of at least one transceiver and/or at least one antenna element associated with the at least one of the discontinuous transmission pattern and the discontinuous reception pattern.

According to some examples, the information element comprises information related to the power adaptation configuration, the information related to the power adaptation configuration comprising an indication of whether Physical Downlink Shared Channel power reduction can be used for the discontinuous transmission pattern.

According to some examples, the information element comprises information related to the power adaptation configuration, the information related to the power adaptation configuration indicating the power level of Physical Downlink Shared Channel transmission that can be used for the discontinuous transmission pattern in the first cell.

According to some examples, the information element comprises information related to the power adaptation configuration, the information related to the power adaptation configuration comprising an indication of whether a power reduction can be used for the at least one of the discontinuous transmission pattern and the discontinuous reception pattern.

According to some examples, the information element comprises information related to the power adaptation configuration, the information related to the power adaptation configuration comprising an indication of the Physical Downlink Shared Channel power reduction range that can be used for the discontinuous transmission pattern.

According to some examples, the information element is for active periods of the at least one of the discontinuous transmission pattern and the discontinuous reception pattern, wherein the apparatus comprises: means for receiving, from the network entity, a second information element for inactive periods of the first cell, the second information element comprising spatial adaptation information, power adaptation information and information describing at least one of a discontinuous transmission pattern and a discontinuous reception pattern; means for sending, to the network entity, a response indicating that the configuration for the second cell has been updated or not based on the second information element for the first cell.

According to some examples, the information element comprising information related to the spatial adaptation configuration and information related to the power adaptation configuration.

According to an eleventh aspect there is provided an apparatus comprising: at least one processor; and at least one memory including computer program code; the at least one memory and the computer program code configured to, with the at least one processor, cause the apparatus at least to perform: receiving, from a network entity, an information element for a first cell, the information element comprising i) information related to least one of spatial adaptation configuration and power adaptation configuration and ii) information describing at least one of a discontinuous transmission pattern and a discontinuous reception pattern; determining whether to update a configuration for a second cell based on the information element for the first cell.

According to some examples, the at least one memory and the computer program code are configured to, with the at least one processor, cause the apparatus at least to perform: sending, to the network entity, a response indicating that a configuration for the second cell has been updated or not based on the information element for the first cell.

According to some examples, the network entity comprises a distributed unit of the first cell in a first radio access network node and the apparatus comprises by a centralized unit in the first radio access network node.

According to some examples, the network entity comprises a centralized unit for a distributed unit of the first cell in a first radio access network node, and the apparatus comprises a centralized unit for a distributed unit of the second cell in a second radio access network node.

According to some examples, the network entity comprises a distributed unit of the first cell in a first radio access network node and the apparatus comprises a centralized unit in the first radio access network node, wherein the centralized unit is configured to forward the information element to a distributed unit of the second cell in the first radio access network node.

According to some examples, the information describing the at least one of the discontinuous transmission pattern and the discontinuous reception pattern comprises at least one of: an identifier of a discontinuous transmission pattern; an identifier of a discontinuous reception pattern; a discontinuous transmission cycle periodicity; a discontinuous reception cycle periodicity; a discontinuous transmission on-duration time period; a discontinuous reception on-duration time period; a time offset for the discontinuous transmission pattern; a time offset for the discontinuous reception pattern.

According to some examples, updating the configuration for the second cell comprises at least one of: changing a discontinuous transmission pattern of the second cell to minimize interference with the at least one of the discontinuous transmission pattern and the discontinuous reception pattern of the first cell by selecting the discontinuous transmission pattern of the second cell to have active transmission periods when the first cell has inactive periods and/or is using a lower power level; changing a discontinuous reception pattern of the second cell to minimize interference with the at least one of the discontinuous transmission pattern and the discontinuous reception pattern of the first cell by selecting the discontinuous reception pattern of the second cell to have active reception periods when the first cell has inactive periods and/or is using a lower power level.

According to some examples, the information element comprises information related to the spatial adaptation configuration, the information related to the spatial adaptation configuration comprising an indication indicating whether a spatial adaptation pattern is used for the at least one of the discontinuous transmission pattern and the discontinuous reception pattern.

According to some examples, the information element comprises information related to the spatial adaptation configuration, the information related to the spatial adaptation configuration indicating the number of transceivers and/or antenna elements associated with the at least one of the discontinuous transmission pattern and the discontinuous reception pattern.

According to some examples, the information element comprises information related to the spatial adaptation configuration, the information related to the spatial adaptation configuration comprising a range of at least one transceiver and/or at least one antenna element associated with the at least one of the discontinuous transmission pattern and the discontinuous reception pattern.

According to some examples, the information element comprises information related to the power adaptation configuration, the information related to the power adaptation configuration comprising an indication of whether Physical Downlink Shared Channel power reduction can be used for the discontinuous transmission pattern.

According to some examples, the information element comprises information related to the power adaptation configuration, the information related to the power adaptation configuration indicating the power level of Physical Downlink Shared Channel transmission that can be used for the discontinuous transmission pattern in the first cell.

According to some examples, the information element comprises information related to the power adaptation configuration, the information related to the power adaptation configuration comprising an indication of whether a power reduction can be used for the at least one of the discontinuous transmission pattern and the discontinuous reception pattern.

According to some examples, the information element comprises information related to the power adaptation configuration, the information related to the power adaptation configuration comprising an indication of the Physical Downlink Shared Channel power reduction range that can be used for the discontinuous transmission pattern.

According to some examples, the information element is for active periods of the at least one of the discontinuous transmission pattern and the discontinuous reception pattern, wherein the apparatus comprises: means for receiving, from the network entity, a second information element for inactive periods of the first cell, the second information element comprising spatial adaptation information, power adaptation information and information describing at least one of a discontinuous transmission pattern and a discontinuous reception pattern; means for sending, to the network entity, a response indicating that the configuration for the second cell has been updated or not based on the second information element for the first cell.

According to some examples, the information element comprising information related to the spatial adaptation configuration and information related to the power adaptation configuration.

According to a twelfth aspect there is provided an apparatus comprising circuitry for: receiving, from a network entity, an information element for a first cell, the information element comprising i) information related to least one of spatial adaptation configuration and power adaptation configuration and ii) information describing at least one of a discontinuous transmission pattern and a discontinuous reception pattern; determining whether to update a configuration for a second cell based on the information element for the first cell.

According to a thirteenth aspect there is provided a computer program comprising instructions for causing an apparatus to perform at least the following: receiving, from a network entity, an information element for a first cell, the information element comprising i) information related to least one of spatial adaptation configuration and power adaptation configuration and ii) information describing at least one of a discontinuous transmission pattern and a discontinuous reception pattern; determining whether to update a configuration for a second cell based on the information element for the first cell.

According to a fourteenth aspect there is provided a computer program comprising instructions stored thereon for performing at least the following: receiving, from a network entity, an information element for a first cell, the information element comprising i) information related to least one of spatial adaptation configuration and power adaptation configuration and ii) information describing at least one of a discontinuous transmission pattern and a discontinuous reception pattern; determining whether to update a configuration for a second cell based on the information element for the first cell.

According to a fifteenth aspect there is provided a non-transitory computer readable medium comprising program instructions for causing an apparatus to perform at least the following: receiving, from a network entity, an information element for a first cell, the information element comprising i) information related to least one of spatial adaptation configuration and power adaptation configuration and ii) information describing at least one of a discontinuous transmission pattern and a discontinuous reception pattern; determining whether to update a configuration for a second cell based on the information element for the first cell.

According to a sixteenth aspect there is provided a non-transitory computer readable medium comprising program instructions stored thereon for performing at least the following: receiving, from a network entity, an information element for a first cell, the information element comprising i) information related to least one of spatial adaptation configuration and power adaptation configuration and ii) information describing at least one of a discontinuous transmission pattern and a discontinuous reception pattern; determining whether to update a configuration for a second cell based on the information element for the first cell.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows an example DTX pattern;
Figure 2 shows an example message flow;
Figure 3 shows an example message flow;
Figure 4 shows an example message flow;
Figure 5 shows an example message flow;
Figure 6 shows an example apparatus;
Figure 7 shows an example apparatus;
Figure 8 shows an example method flow;
Figure 9 shows a schematic representation of a non-volatile memory medium storing instructions which when executed by a processor allow a processor to perform one or more of the steps of the methods disclosed herein.

### DETAILED DESCRIPTION

In the following certain embodiments are explained with reference to mobile communication devices capable of communication via a wireless cellular system and mobile communication systems serving such mobile communication devices.

Discontinuous Transmission and Reception (cell DTX/DRX) is a mechanism where the cell transmission/reception of data traffic and/or common channels and/or reference signals may be omitted partially or totally during the cell DTX/DRX non-active (inactive) times. The cell may be able then to switch off certain hardware components, partially or completely, and enter an energy-saving state (a sleep state) and thereby save energy during these non-active times.

Using DTX/DRX can save energy. When cell DTX/DRX is performed, the cell DTX/DRX alignment is required to ensure the network works properly. To ensure the cell DTX/DRX will not impact the UE in RRC_idle, the Random Access Channel (RACH), paging, and SIBs may not be omitted for RRC idle/inactive UEs state in the non-active period of cell DTX and/or cell DRX in some examples.

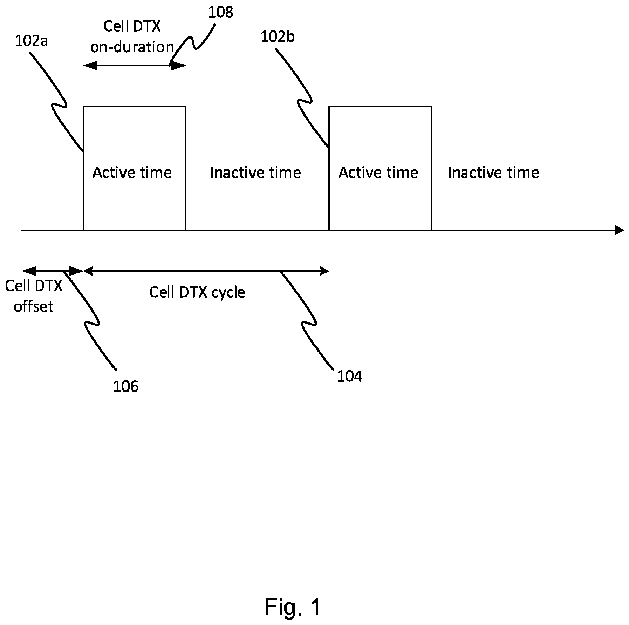

As shown in Figure 1, a Cell DTX pattern is defined by three parameters.
1. The cell DTX cycle 104: this defines the periodicity which with which DTX periods repeat.
2. The cell DTX on-duration period 108: the duration of an active time 102a within one DTX cycle (e.g., within one DTX cycle 104).
3. The cell DTX offset 106: the point in time (e.g. subframe number or slot number), where a given DTX pattern starts (e.g. relative to an absolute time).

A cell DRX pattern may be defined similarly by a cell DRX cycle, a cell DRX on-duration period and a cell DRX offset.

Cell DTX and DRX can be considered in three distinct (but inter-dependent) domains: time domain; spatial domain; power domain. These domains can be improved as follows:
- Time domain - cell DRX/DTX mechanisms through which a cell could have predefined active/inactive periods of time, where data (and a part of) signalling resources shall be enabled/disabled.
- Spatial domain - improvements in the different spatial elements like antenna ports, beams etc., which could be intelligently disabled/enabled to improve energy savings.
- Power domain - enhancements in power control to improve network energy savings.

Improving DTX and DRX can be performed jointly across domains. For example, dynamic adaptation of Transceivers (TRXs)/antennas and PDSCH power can be used (and configured) in conjunction with cell DTX such that a certain number of TRX and/or PDSCH power configuration can be associated with a given cell DTX pattern. For example, when a network is going to a deeper sleep mode, hardware components can be switched off for energy saving purposes. For a different cell DTX/DRX pattern that is mapped to leverage a deeper sleep mode, the number of panels or Transmission and Reception Points (TRPs) can be reduced during cell DTX/DRX active periods by muting transceiver chains with associated PAs (e.g., to 8-port with single panel/TRP) for better energy efficiency. Configurations of cell DTX/DRX can therefore be considered jointly with adaptation of spatial and power domain techniques. Examples described herein describe methods for coordinating cell DTX/DRX patterns across cells. Some examples described herein also describe methods for coordinating power domain and/or spatial domain information across cells along with the coordination of cell DTX/DRX patterns. By combining DTX/DRX pattern information, power domain and spatial domain information in a single information element to be sent from a first cell to a neighbouring cell, the neighbouring cell can ensure that coordination is provided its own cell for a set of DTX/DRX pattern information, power domain and spatial comedian information that is coordinated within the first cell.

For such joint use of these techniques, coordination is useful. The coordination may comprise at least one of:
- Co-ordination between the Cell DRX/DTX, Spatial and Power domain configurations.
- Co-ordination between intra-gNB and inter-gNB neighbouring cells of the joint use of Cell DRX/DTX, Spatial and Power configuration(s).

Lack of co-ordination would lead to issues such as interference and degradation in the network service performance. Some of the examples described herein provide a framework through which RAN nodes can share and enforce information for coordination aspects described above.

According to some examples, inter-node and/or intra-node exchange of cell DTX/DRX information is provided. According to some examples, the information comprises a DTX/DRX configuration. According to some examples, the DTX/DRX information is supplemented with spatial domain adaptation information. According to some examples, the DTX/DRX information is supplemented with power adaptation information. The DTX/DRX information may provide more optimal interference avoidance.

According to some examples, Network Energy Saving (NES) information is exchanged across intra-gNB node entities. According to some examples, Network Energy Saving (NES) information is exchanged across inter-gNB node entities. NES information may comprise configurations related to Cell DRX and Cell DTX. In some examples, the NES information may further comprise spatial domain adaptation information and/or power adaptation information and their relative associations for a given cell. The NES information may comprise an information element comprising spatial adaptation information, power adaptation information and information describing at least one of a discontinuous transmission pattern and a discontinuous reception pattern.

According to some examples, a binary indication can be associated to a cell DTX pattern indicating whether TRXs/antenna element muting and/or PDSCH power reduction may be used during a cell DTX pattern. In some examples, the binary indication can be provided separately for the cell active and cell inactive periods. PDSCH power reduction may be relative to a maximum power level configured by e.g., RRC signalling or System Information Block (SIB).

According to some examples the number of TRXs/antenna elements and/or the power level of PDSCH transmit power associated to a cell DTX pattern is provided. The range of TRXs/antenna elements and/or the power level range of PDSCH transmit power can be associated to a DTX pattern. In some examples, the number of TRXs/antenna elements and/or the power level of PDSCH transmit power can be provided separately for the cell active and cell inactive periods.

The NES information can be implemented as a common IE (denoted herein "NES configuration IE") to ensure that all these configurations are consistent with each other. This consistency is critical to ensure that all these features work together towards network energy savings for the given cell without compromising on network performance for the neighbouring interfering cells.

An F1 interface can be considered to comprise an interface that connects a gNB Centralized Unit (gNB CU) to a gNB Distributed Unit (gNB DU). To communicate over the F1 interface, F1 Application Protocol (FLAP) signalling can be used. According to some examples described herein, F1AP is used to share NES information within a given gNB. An F1 interface is defined in 3GPP TS38.300.

An Xn interface can be considered to comprise to an interface that connects base station nodes, and can be used between NG-RAN nodes for example. To communicate over the Xn interface, Xn Application Protocol (XnAP) signalling can be used. According to some examples described herein, XnAP is used to share NES information across gNBs. An Xn interface is defined in 3GPP TS38.300.

During the time when cell DTX is enabled, in case of medium load the node may be transmitting at higher power during its active times to accommodate the traffic, which implies that the interference caused to other base station nodes (e.g., New Generation Radio Access Network (NG-RAN) nodes) during the on-duration can be higher, particularly for nodes managing neighbouring (e.g., adjacent) cells. Similarly, in case of low load the node may be transmitting at lower power during its active times as that is sufficient to accommodate the traffic, which implies that the interference caused to other NG-RAN nodes during the on-duration can be lower. Therefore, the receiving node may use the NES information to optimize the selection of its DTX pattern, preferring to fit its cell DTX active time during periods where an interfering cell (e.g., a neighbouring cell) may be either in cell DTX inactive time or in cell DTX active time but using a lower power level or lower number of TRXs with the aim to minimize the interference level.

An Information Element (IE) ("NES Configuration IE") is described below. According to some examples, the NES Configuration IE can be used within the existing IE Cell Information in FLAP and XnAP. In the example IE below, it is assumed that distinct cell DRX and DTX configurations are defined. However, the signalling can be extended to the case where a single DTX and DRX configuration is used per cell.

According to an example, an exemplary NES Configuration IE may have the following structure and information:

### NES Configuration IE Option 1

### List of Cells

➢ Cell Information
   ∘ ...........
   ∘ NES Configuration
      ▪ Cell DRX Configuration
         - Cell DRX pattern ID and parameters, and
         - Cell DRX activity/inactivity bitmap, or
         - cell DRX activity/inactivity probabilities
      ▪ Cell DTX Configuration
         - Cell DTX pattern ID and parameters, and
         - Cell DTX activity/inactivity bitmap, or
         - Cell DTX activity/inactivity probabilities
         - PDSCH Power Adaptation Configuration
            ∘ Power Adaptation flag (enabled, not enabled), and/or
            ∘ Power level, and/or
            ∘ Power level range
         - Spatial Domain Configuration
            ∘ Spatial Adaptation flag (enabled, not enabled), and/or
            ∘ Number of TRXs, and/or
            ∘ Range of TRXs
            ∘ number/range of muted antenna elements

According to another example, an exemplary NES Configuration IE may have the following structure and information:

### NES Configuration IE Definition - Option#2

### List of Cells

➢ Cell Information
   ∘ ...........
   ∘ Cell DRX Configuration
      ▪ Cell DRX pattern ID and parameters, and
      ▪ Cell DRX activity/inactivity bitmap, or
      ▪ Cell DRX activity/inactivity probabilities
   ∘ Cell DTX Configuration
      ▪ Cell DTX pattern ID and parameters, and
      ▪ Cell DTX activity/inactivity bitmap, or
      ▪ Cell DTX activity/inactivity probabilities
      ▪ PDSCH Power Adaptation Configuration
         - Power Adaptation flag (enabled, not enabled), and/or
         - Power level during active time, and/or
         - Power level inactive time, or
         - Power level range active time, and/or
         - Power level range inactive time
      ▪ Spatial Domain Configuration
         - Spatial Adaptation flag (enabled, not enabled), and/or
         - Number of TRXs during active time, and/or
         - Number of TRXs during inactive time, or
         - Range of TRXs during active time, and/or
         - Range of TRXs during inactive time
         - number/range of muted antenna elements

The second IE (Option#2) is particularly useful when configuration lEs are sent separately for active and inactive periods of cell DTX/DRX.

It should be noted that in either of the lEs above, in some examples the lEs may have more information or may not have some of the included information.

The NES configuration IE may include spatial adaptation information. The NES Configuration IE may include power adaptation information for both DL and UL.

The lEs above may comprise spatial adaptation patterns used for DTX/DRX. A spatial adaptation pattern can be defined based on a combination of transmit Radio Frequency (RF) chains, transceiver RF chains and antenna elements that are active or inactive (e.g., muted).

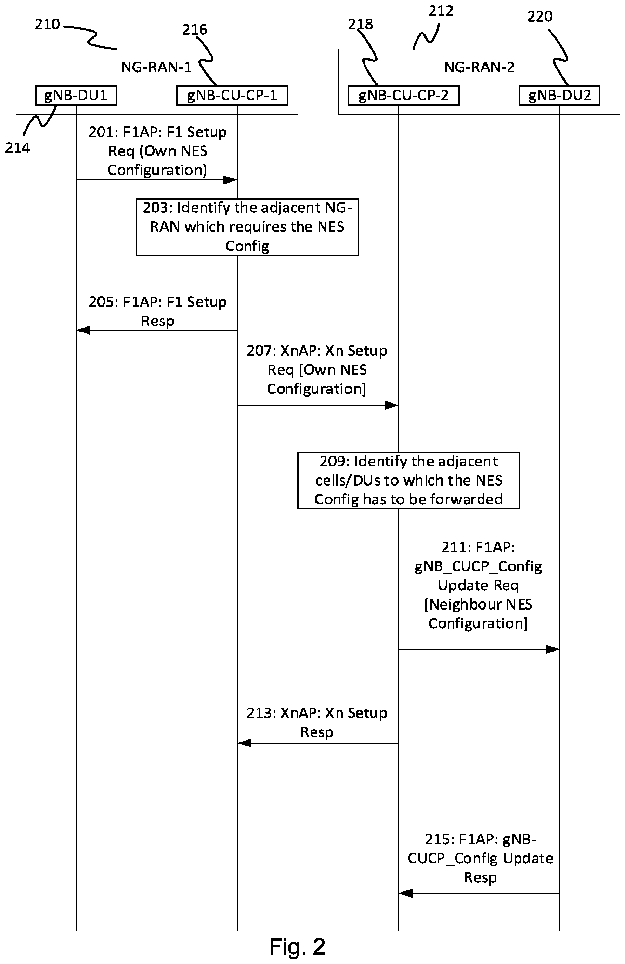

Figure 2 shows an example message flow for initially sharing NES configuration information between two base station nodes. The NES configuration information may comprise a NES configuration IE as described above.

In the examples described below with respect to Figures 2, 3, 4 and 5, NG-RAN nodes are used. However, it will be understood that in other examples any other suitable base station node may carry out these steps.

At 201, gNB-DU1 214 of NG-RAN node 210 shares its NES configuration with gNB-CU-CP-1 216 of NG-RAN node 214 (gNB Central Unit Control Plane). The NES configuration may be shared using a NES Configuration IE. According to some examples, the NES configuration may be sent over an F1 interface using F1 Application Protocol (F1AP).

At 203, gNB-CU-CP-1 216 identifies an adjacent RAN node (NG-RAN-2 217) that requires the NES configuration of NG-RAN-1 210. This may comprise identifying that NG-RAN-2 217 is a neighbouring gNB. At 205, gNB-CU-CP-1 216 sends a response message to gNB-DU-1. According to some examples, this may be sent using FLAP.

At 207, NG-RAN node 210 sends the NES configuration of NG-RAN-1 210 from gNB-CU-CP-1 216 to gNB-CU-CP-2 218 of NG-RAN-2 212. According to some examples, this is sent over an Xn interface. According to some examples, the NES configuration is sent using XnAP.

At 209, gNB-CU-CP-2 218 identifies cells/DUs that require the NES configuration of NG-RAN-1 210. This may comprise determining cells/DUs that are part of NG-RAN-2 212.

At 211, gNB-CU-CP-2 218 sends the NES configuration of NG-RAN-1 210 to gNB-DU2 220. According to some examples this may be sent using FLAP.

At 213, gNB-CU-CP-2 218 sends a response to the message sent at 207. This response may be sent using XnAP. At 215, gNB-DU2 220 sends a response to the message sent at 211 to confirm receipt of the information sent at 211.

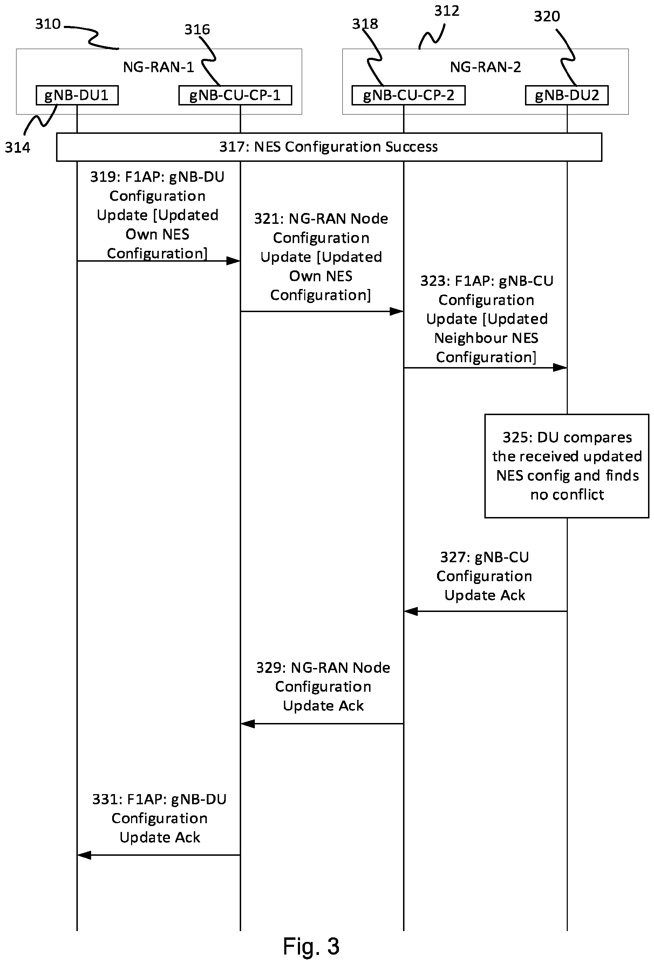

Figure 3 shows an example message flow for updating NES configuration information shared between two base station nodes. The NES configuration information may comprise a NES configuration IE as described above. In some examples, the method of Figure 3 may take place after the method of Figure 2.

At 317, the NES configuration of NG-RAN-1 310 has been successfully shared with NG-RAN-2 312 (for example using the method of Figure 2).

At some point after 317, there is an update in the NES configuration of NG-RAN-1 310. For example, the DTX or DRX pattern is updated, the offset is updated or the bitmap of the Cell DTX/DRX is updates. At 319, gNB-DU1 314 sends a configuration update with the updated NES configuration to gNB-CU-CP-1 316. According to some examples, the update is sent using FLAP.

At 321, gNB-CU-CP-1 316 sends the updated NES configuration to gNB-CU-CP-2 318. This may be sent using XnAP in some examples. At 323, gNB-CU-CP-2 318 sends the updated NES configuration to gNB-DU2 320.

At 325, gNB-DU2 320 compares the received updated NES configuration of NG-RAN1 310 to determine if there is any conflict with its own configuration. When gNB-DU2 320 determines that there is no conflict, it applies a configuration update to its own cell to take into account the updated NES configuration of NG-RAN1 310. A conflict may occur, for example, when gNB-DU2 320 has too much network traffic in its own cell to adapt DRX/DTX pattern to avoid interference with the cell of gNB-DU1 314.

At 327, an acknowledgement that a configuration update has been performed by gNB-DU2 320 is sent from gNB-DU2 320 to gNB-CU-CP-2 318. This may be sent using FLAP. At 329, the acknowledgment is forwarded from gNB-CU-CP-2 318 to gNB-CU-CP-1 316. This may be sent using XnAP. At 331, the acknowledgement is forwarded from gNB-CU-CP-1 316 to gNB-DU1 314.

A NES configuration may be updated when at least one of the following takes place:
- there is an updated association between cell DRX/DTX;
- there is a spatial adaptation configuration change;
- there is a power adaptation configuration change.

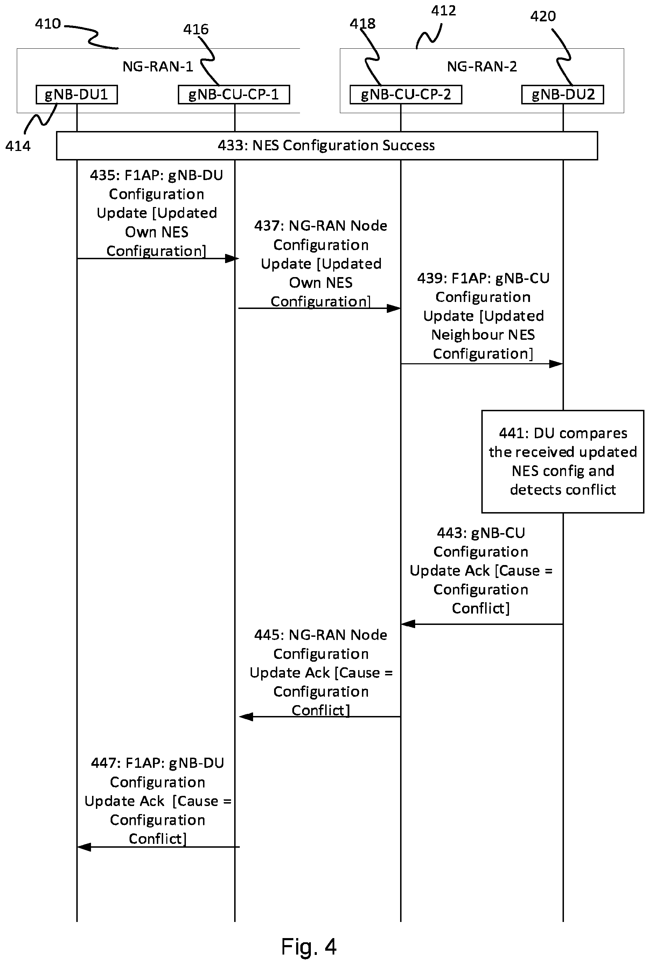

Figure 4 shows an example where there is an unsuccessful inter gNB NES configuration update. 433, 435, 437 and 439 are similar to 317, 319, 321 and 323 of Figure 3. However, in contrast to 325 of Figure 3, at 441 of Figure 4 gNB-DU2 420 determines that updating its own NES configuration to take into account the updated gNB-DU1 414 NES configuration received at 439 would lead to a conflict with its own NES configuration. This results in gNB-DU2 420 not applying the received updated value. gNB-DU2 420 then responds with a cause value describing the conflict at 443 to gNB-DU-DP2 418. This can be sent via FLAP. The response is then forwarded at 445 to gNB-CU-CP-1 416 from gNB-CU-CP-2 418. This can be sent via XnAP. The response is then forwarded at 447from gNB-CU-CP-1 416 to gNB-DU1 414. This can be performed using FLAP.

According to some examples, based on the cause value received at 447, gNB-DU1 may update its NES configuration again to a NES configuration that does not cause conflict with the NES configuration of gNB-DU2 420.

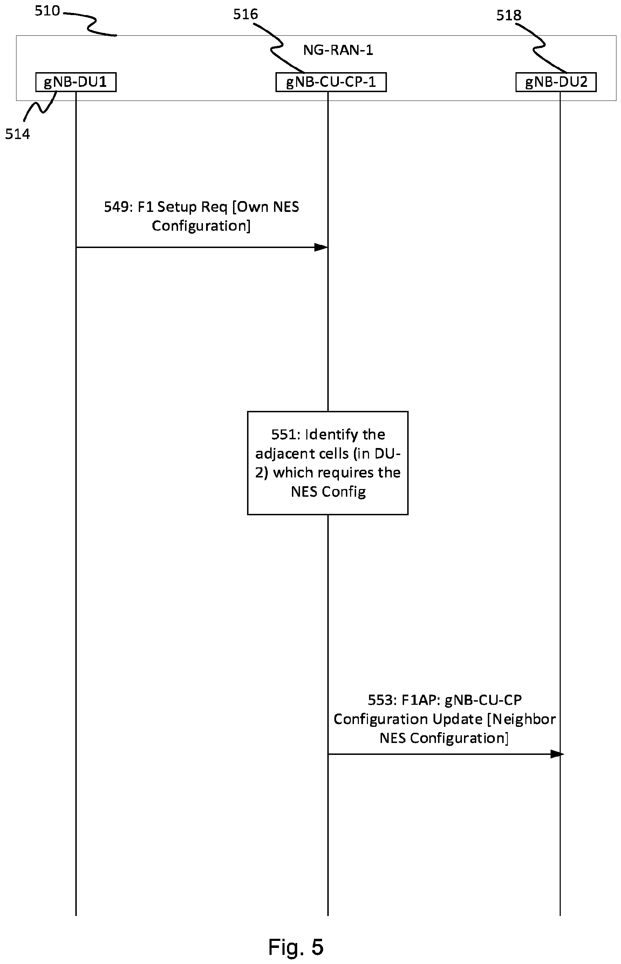

Figure 5 shows an example of NES information being shared intra-gNB.

At 549, gNB-DU1 514 of NG-RAN-1 node 516 sends a NES configuration of gNB-DU1 514 to gNB-CU-CP-1 516.

At 551, gNB-CU-CP-1 516 identifies a cell of gNB-DU2 518 of NG-RAN-1 node 516 that neighbours a cell of gNB-DU-1 514. At 553, gNB-CU-CP-1 516 sends the NES configuration to gNB-DU2 518.

According to some examples, the signalling performed in Figure 5 is performed using FLAP. Nes configuration updates may be provided from gNB-DU1 514 to gNB-DU2 518 using a method similar to the methods described in Figures 3 and 4 (using F1AP).

It should be noted that inter-gNB and intra-gNB cases can co-exist and may have to be handled together. For example, when a gNB-CU-CP receives a given NES Configuration from its gNB-DU, it identifies all the neighbouring cells for that serving cells (associated with the NES Configuration). It then forwards the NES configuration to other DUs in the same gNB (intra-gNB neighbours) and a neighbouring gNB for the inter-gNB neighbours.

The receiving gNB-DU in the above examples may use the received NES configuration information to adjust its own NES configuration to reduce interference.

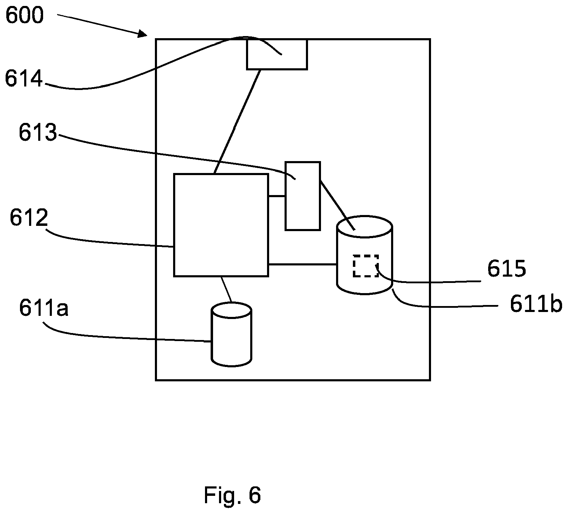

Figure 6 illustrates an example of a control apparatus 600 for controlling a network. The control apparatus may comprise at least one random access memory (RAM) 611a, at least on read only memory (ROM) 611b, at least one processor 612, 613 and an input/output interface 614. The at least one processor 612, 613 may be coupled to the RAM 611a and the ROM 611b. The at least one processor 612, 613 may be configured to execute an appropriate software code 615. The software code 615 may for example allow to perform one or more steps to perform one or more of the present aspects. The software code 615 may be stored in the ROM 611b. The control apparatus 600 may be interconnected with another control apparatus 600 controlling another function of the RAN or the core network.

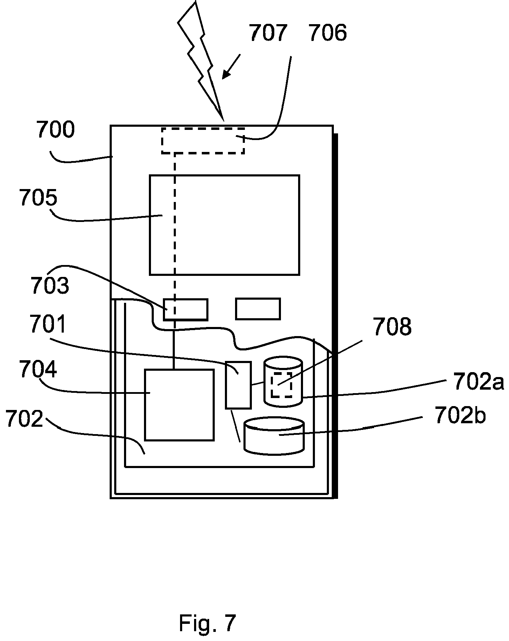

Figure 7 illustrates an example of a terminal 700, such as a UE. The terminal 700 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 700 may receive signals over an air or radio interface 707 via appropriate apparatus for receiving and may transmit signals via appropriate apparatus for transmitting radio signals. In Figure 7 transceiver apparatus is designated schematically by block 706. The transceiver apparatus 706 may be provided for example by means of a radio part and associated antenna arrangement. The antenna arrangement may be arranged internally or externally to the mobile device.

The terminal 700 may be provided with at least one processor 701, at least one memory ROM 702a, at least one RAM 702b and other possible components 703 for use in software and hardware aided execution of tasks it is designed to perform, including control of access to and communications with access systems and other communication devices. The at least one processor 701 is coupled to the RAM 702b and the ROM 702a. The at least one processor 701 may be configured to execute an appropriate software code 708. The software code 708 may for example allow to perform one or more of the present aspects. The software code 708 may be stored in the ROM 702a.

The processor, storage and other relevant control apparatus can be provided on an appropriate circuit board and/or in chipsets. This feature is denoted by reference 704. The device may optionally have a user interface such as key pad 705, touch sensitive screen or pad, combinations thereof or the like. Optionally one or more of a display, a speaker and a microphone may be provided depending on the type of the device.

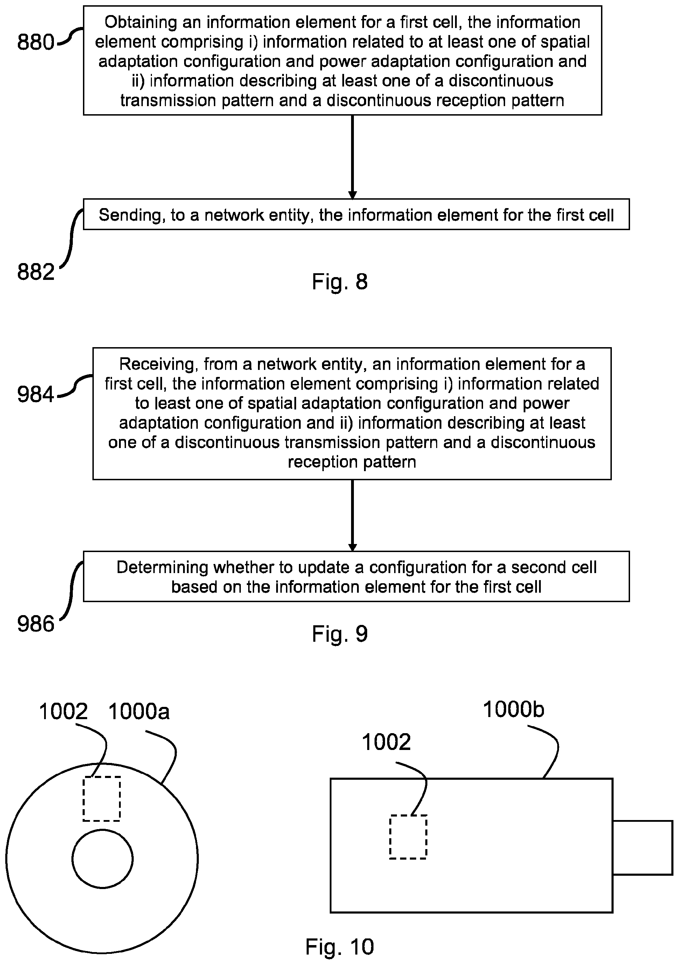

Figure 8 shows an example method flow. The method of Figure 8 may be performed by a configuration IE sender (e.g., a NES configuration sender), for example gNB-DU1 314, gNB-CU-CP-1 316, gNB-CU-CP-2 318, gNB-DU1 514 or gNB-CU-CP-1 516.

At 880, the method comprises obtaining an information element for a first cell, the information element comprising i) information related to at least one of spatial adaptation configuration and power adaptation configuration and ii) information describing at least one of a discontinuous transmission pattern and a discontinuous reception pattern.

At 882, the method comprises sending, to a network entity, the information element for the first cell.

Figure 9 shows an example method flow. The method of Figure 9 may be performed by a configuration IE receiver (e.g., NES configuration receiver), for example gNB-DU2 320 or gNB-DU2 518.

At 984, the method comprises receiving, from a network entity, an information element for a first cell, the information element comprising i) information related to least one of spatial adaptation configuration and power adaptation configuration and ii) information describing at least one of a discontinuous transmission pattern and a discontinuous reception pattern.

At 986, the method comprises determining whether to update a configuration for a second cell based on the information element for the first cell.

Figure 10 shows a schematic representation of non-volatile memory media 1000a (e.g. computer disc (CD) or digital versatile disc (DVD)) and 1000b (e.g. universal serial bus (USB) memory stick) storing instructions and/or parameters 1002 which when executed by a processor allow the processor to perform one or more of the steps of the above-described methods.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus (314) comprising:
means for obtaining an information element for a first cell, the information element comprising i) information related to at least one of spatial adaptation configuration and power adaptation configuration and ii) information describing at least one of a discontinuous transmission pattern and a discontinuous reception pattern (880); and
means for sending, to a network entity, the information element for the first cell (882).

2. The apparatus according to claim 1, comprising: means for receiving, from the network entity, a response indicating that a configuration for a second cell has been updated or not based on the information element for the first cell.

3. The apparatus according to claim 1 or claim 2, wherein the apparatus comprises a distributed unit of the first cell in a first radio access network node and the network entity comprises a centralized unit in the first radio access network node.

4. The apparatus according to claim 1 or claim 2, wherein the apparatus comprises a centralized unit for a distributed unit of the first cell in a first radio access network node, and wherein the network entity comprises a centralized unit for a distributed unit of the second cell in a second radio access network node.

5. The apparatus according to claim 1 or claim 2, wherein the apparatus comprises a distributed unit of the first cell in a first radio access network node and the network entity comprises a centralized unit in the first radio access network node.

6. The apparatus according to any preceding claim, wherein the information describing the at least one of the discontinuous transmission pattern and the discontinuous reception pattern comprises at least one of:
an identifier of a discontinuous transmission pattern;
an identifier of a discontinuous reception pattern;
a discontinuous transmission cycle periodicity;
a discontinuous reception cycle periodicity;
a discontinuous transmission on-duration time period;
a discontinuous reception on-duration time period;
a time offset for the discontinuous transmission pattern;
a time offset for the discontinuous reception pattern.

7. The apparatus according to any preceding claim, wherein the information element comprises information related to the spatial adaptation configuration, the information related to the spatial adaptation configuration comprising an indication indicating whether a spatial adaptation pattern is used for the at least one of the discontinuous transmission pattern and the discontinuous reception pattern.

8. The apparatus according to any preceding claim, wherein the information element comprises information related to the spatial adaptation configuration, the information related to the spatial adaptation configuration indicating the number of transceivers and/or antenna elements associated with the at least one of the discontinuous transmission pattern and the discontinuous reception pattern.

9. An apparatus (320) comprising:
means for receiving, from a network entity, an information element for a first cell, the information element comprising i) information related to least one of spatial adaptation configuration and power adaptation configuration and ii) information describing at least one of a discontinuous transmission pattern and a discontinuous reception pattern (984); and
means for determining whether to update a configuration for a second cell based on the information element for the first cell (986).

10. The apparatus according to claim 9, comprising means for sending, to the network entity, a response indicating that a configuration for the second cell has been updated or not based on the information element for the first cell.

11. The apparatus according to claim 9 or claim 10, wherein the network entity comprises a distributed unit of the first cell in a first radio access network node and the apparatus comprises a centralized unit in the first radio access network node.

12. The apparatus according to claim 9 or claim 10, wherein the network entity comprises a centralized unit for a distributed unit of the first cell in a first radio access network node, and wherein the apparatus comprises a centralized unit for a distributed unit of the second cell in a second radio access network node.

13. The apparatus according to claim 9 or claim 10, wherein the network entity comprises a distributed unit of the first cell in a first radio access network node and apparatus comprises a centralized unit in the first radio access network node, wherein the centralized unit is configured to forward the information element to a distributed unit of the second cell in the first radio access network node.

14. The apparatus according to any of claims 9 to 13, wherein the information describing the at least one of the discontinuous transmission pattern and the discontinuous reception pattern comprises at least one of:
an identifier of a discontinuous transmission pattern;
an identifier of a discontinuous reception pattern;
a discontinuous transmission cycle periodicity;
a discontinuous reception cycle periodicity;
a discontinuous transmission on-duration time period;
a discontinuous reception on-duration time period;
a time offset for the discontinuous transmission pattern;
a time offset for the discontinuous reception pattern.

15. The apparatus according to any of claims 9 to 14, wherein updating the configuration for the second cell comprises at least one of:
changing a discontinuous transmission pattern of the second cell to minimize interference with the at least one of the discontinuous transmission pattern and the discontinuous reception pattern of the first cell by selecting the discontinuous transmission pattern of the second cell to have active transmission periods when the first cell has inactive periods and/or is using a lower power level;
changing a discontinuous reception pattern of the second cell to minimize interference with the at least one of the discontinuous transmission pattern and the discontinuous reception pattern of the first cell by selecting the discontinuous reception pattern of the second cell to have active reception periods when the first cell has inactive periods and/or is using a lower power level.
